# EUROPÄISCHE PATENTSCHRIFT

(11) **EP 2 945 794 B1**
(45) Veröffentlichungstag und Bekanntmachung des Hinweises auf die Patenterteilung: **03.04.2019**
(21) Anmeldenummer: 14700215.8
(22) Anmeldetag: 10.01.2014
(51) Int. Cl.: B29C 67/00, B26D 7/27, B29C 59/02, B29C 63/00

(54) **VERFAHREN ZUM RUNDEN VON KANTEN AN POLYMEREN KFZ-BAUTEILEN**
METHOD FOR ROUNDING EDGES OF POLYMER MOTOR VEHICLE COMPONENT
PROCÉDÉ POUR DÉLARDER UN BORD D'UN ÉLÉMENT STRUCTURAL POLYMÈRE POUR VÉHICULE À MOTEUR

(30) Priorität: 16.01.2013 DE 102013100420
(43) Veröffentlichungstag der Anmeldung: 25.11.2015
(73) Patentinhaber: REHAU AG + Co, 95111 Rehau (DE)
(72) Erfinder: STEIN, Helmut, 95028 Hof (DE)
(86) Internationale Anmeldenummer: PCT/EP2014/000049
(87) Internationale Veröffentlichungsnummer: WO 2014/111243

(56) Entgegenhaltungen:
- EP-A2- 1 170 099
- DE-A1-102005 048 295
- DE-A1-102006 012 245
- DE-A1-102007 009 114
- JP-A- S54 104 092
- JP-A- 2011 218 373
- US-A1- 2006 130 624
- US-A1- 2010 324 535

## Beschreibung

Die Erfindung betrifft ein Verfahren zur Herstellung eines polymeren Kfz-Bauteils, insbesondere eines Außenanbauteils in Form eines Stoßfängers, Spoilers, Schwellers, Kotflügels oder dergleichen, wobei zunächst, vorzugsweise mittels eines Spritzgussverfahrens, ein polymeres Rohbauteil hergestellt wird.

Insbesondere bei größeren Kunststoff-Spritzgussteilen für die Automobilindustrie werden Durchbrüche in Form von Löchern oder sonstigen, beispielsweise länglichen Aussparungen, erst nach dem Spritzgussprozess erzeugt, um Fließlinien zu vermeiden. Derartige Durchbrüche sind beispielsweise bei modernen Stoßfängern erforderlich, um Cliplöcher für Anbauteile, Parktronic-Systeme, Ausschnitte für Anhängerkupplungen, Scheinwerferreinigung, Sidemarker usw. bereitzustellen.

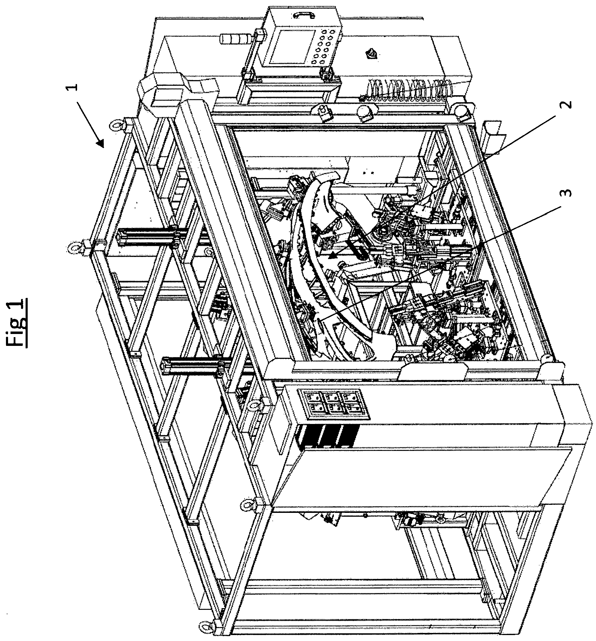

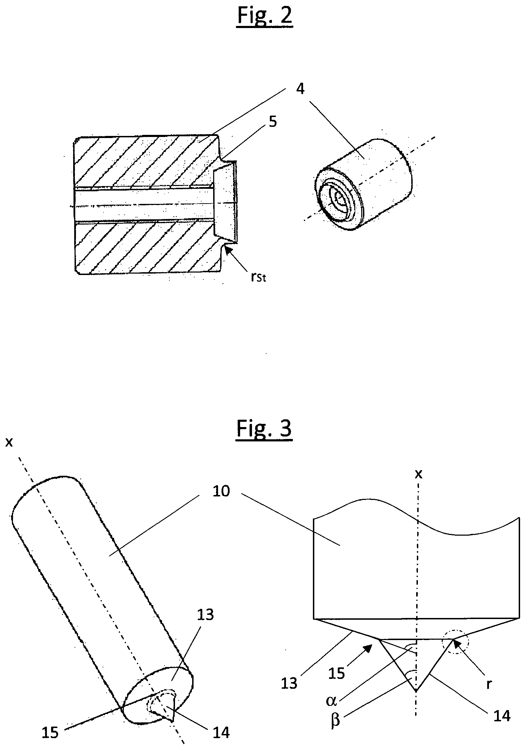

Im Stand der Technik werden die erforderlichen Durchbrüche üblicherweise mittels eines Stanzprozesses hergestellt. Die hierbei entstehenden scharfen Kanten an den Stanzrändern werden durch eine spezielle Formgebung der Stanzstempel (vgl. Fig. 1 und 2) gerundet.

Nachteilig bei dem üblichen Stanzverfahren zur Erzeugung der Durchbrüche ist die Gefahr von Weißbruchbildung an den Schnittflächen, wodurch sich das Erscheinungsbild deutlich verschlechtern kann. Ein weiterer Nachteil sind die sehr hohen Kosten, die mit der Anwendung des Stanzverfahrens einhergehen. So sind beispielsweise für jede Lochgeometrie separate Stanzwerkzeuge und auch entsprechende Ersatzwerkzeuge erforderlich. Die eingesetzten Stanzmaschinen (vergl. Darstellung in Fig. 1) sind in der Regel nur für einen speziellen Artikel, also beispielsweise eine konkrete Stoßfängerform, einsetzbar. Dies erfordert hohe Kosten im Falle von Artikeländerungen (z. B. Facelift oder ein gänzlich neues Modell), da neben neuen Stanzwerkzeugen auch die entsprechende Stanzvorrichtung komplett neu konzipiert werden muss. Ein weiterer Nachteil besteht darin, dass die mit dem entsprechend geformten Stanzstempel erzeugten Prägeradien am Rand des Durchbruches insbesondere bei gekrümmten Oberflächen ungleichmäßig sein können. Ferner besteht eine eingeschränkte konstruktive Freiheit bei der Produktgestaltung, da der Gestaltung der Stanzmaschine Grenzen gesetzt sind. Insgesamt handelt es sich bei dem Stanzverfahren um ein sehr unflexibles und teures Verfahren zur Erzeugung von Durchbrüchen in polymeren Kfz-Bauteilen.

Aus den Druckschriften US 2006/130624 A1, DE 10 2005 048295 A1, US 2010/324535 A1, JP 2011 218373 A, DE 10 2006 0122245 A1, JP S54 104092 A und EP 1 170 099 A2 sind Verfahren zur Radiusanprägung an eine Öffnung bekannt, bei der das Werkzeug zur Radiusanprägung an die Form und Größe der Öffnung angepasst ist. Die DE 10 2007 009 114 A1 zeigt ein Verfahren zur Radiusanprägung, bei der das entsprechende Werkzeug entlang des Öffnungsrandes bewegt wird.

Vor dem beschriebenen Hintergrund liegt der Erfindung die Aufgabe zugrunde, ein Verfahren anzugeben, mit dem Durchbrüche mit definierten Prägeradien, einfach und flexibel hergestellt werden können.

Erfindungsgemäß wird die Aufgabe gelöst durch ein Verfahren zur Herstellung eines polymeren Kfz-Bauteils mit den Merkmalen des Anspruchs 1.

Erfindungsgemäß wird also vom im Stand der Technik üblichen Stanzverfahren, bei dem gleichzeitig mit dem Stanzprozess die Radienanprägung erfolgt, Abstand genommen. Stattdessen wird erfindungsgemäß ein 2-stufiges Verfahren eingesetzt, welches die Flexibilität deutlich erhöht und die Kosten des Verfahrens zur Erzeugung von Durchbrüchen mit abgerundeten Rändern erheblich reduziert. Zunächst erfolgt in einem ersten Verfahrensschritt die Erzeugung des Durchbruches, welcher die Form eines z. B. kreisförmigen Loches, eines Langloches oder einer sonstigen beliebigen Aussparung aufweisen kann. Dieser Durchbruch wird insbesondere für die Integration bestimmter Zusatzelemente, z. B. in Form von Zusatz-Anbauteilen, benötigt, beispielsweise um bei einem Stoßfänger eine ordnungsgemäße Funktion und/oder Montage von Parksensoren, Scheinwerferreinigungsanlagen oder dergleichen zu ermöglichen. In einem zweiten, separaten Verfahrensschritt erfolgt dann die Radiusanprägung an die bei der Erzeugung des Durchbruchs entstehende umlaufende Kante, welche den Übergang von der erzeugten Innenberandung des Durchbruches zur äußeren Rohbauteiloberfläche darstellt. Dieser Übergang ist in der Regel scharfkantig und muss durch die Radiusanprägung geglättet werden. Diese Radiusanprägung erfolgt erfindungsgemäß mit einem Prägewerkzeug, welches eine dem gewünschten Radius der Anprägung entsprechende Kontur aufweist. Dieses Prägewerkzeug wird nun entlang der Innenberandung gegen die umlaufende Kante gedrückt, wodurch ein lokaler Materialfluss an der scharfen Kante mit einer einhergehenden Abrundung der Kante ausgelöst wird. Die erfindungsgemäße Trennung von Erzeugung des Durchbruches in einem ersten Verfahrensschritt und Radiusanprägung an die bei der Durchbrucherzeugung entstehende scharfe umlaufende Kante durch einen separaten zweiten Verfahrensschritt ermöglicht ein Höchstmaß an Flexibilität, da bei der Durchbrucherzeugung selbst die Radiusanprägung keine Rolle mehr spielt. Es können somit zur Erzeugung des Durchbruches sehr viel kostengünstigere Verfahren eingesetzt werden als das im Stand der Technik übliche Stanzverfahren. Vorteilhaft ist ferner, dass bei Anwendung des erfindungsgemäßen Verfahrens keine Weißbruchgefahr im Bereich des Durchbruches besteht. Der Durchbruch ist beim fertig hergestellten Kfz-Bauteil dann in der Regel mit einem bewegbaren (z.B. Scheinwerferreinigungsanlage), festen (z.B. Parksensor) oder abnehmbaren (z.B. Abschlepphaken) Blendelement versehen. Vorzugsweise ist die Innenberandung geschlossen ausgebildet, so dass der Durchbruch vollständig von Material des Kfz-Bauteils umgeben ist. Im Rahmen der Erfindung liegt jedoch auch die Erzeugung und Bearbeitung von Durchbrüchen, die am Rand des Kfz-Bauteils erzeugt werden, so dass die Innenberandung des Durchbruchs unmittelbar an die Außenberandung des Kfz-Bauteils angrenzt.

Das erfindungsgemäße Verfahren ist insbesondere auch dann geeignet, sofern das Rohbauteil vor der Radiusanprägung, vorzugsweise auch vor der Erzeugung des Durchbruchs, mit mindestens einer Lackschicht lackiert wird. Folglich kann mittels des erfindungsgemäßen zweiten Verfahrensschrittes zur Radiusanprägung auch der der umlaufenden, scharfen Kante unmittelbar benachbarte, lackierte Bereich der äußeren Rohbauteiloberfläche ohne Beschädigung umgeformt werden, so dass sich insgesamt ein hervorragendes Erscheinungsbild des lackierten polymeren Bauteils ergibt. Üblicherweise werden bei der Lackierung von polymeren Kfz-Bauteilen mehrere Schichten aufgetragen, beispielsweise in Form einer Basis- und anschließenden Decklackierung.

Im Rahmen der Erfindung liegt es insbesondere, dass die Erzeugung der Radiusanprägung spanlos erfolgt. Dies bedeutet, dass mittels des Prägewerkzeuges lediglich eine lokale Umformung im Bereich der scharfen, umlaufenden Kante am polymeren Bauteil erfolgt, so wie dies auch beim im Stand der Technik bekannten Stanzprozess der Fall ist. Im Rahmen der Erfindung liegt es hierbei insbesondere, dass das Prägewerkzeug ohne Eigenrotation entlang der Innenberandung verfahren und hierbei gegen die umlaufende Kante gedrückt wird. Folglich wird also erfindungsgemäß ein lokales Pressverfahren im Bereich der scharfen, umlaufenden Kante durchgeführt, wobei aufgrund des Anpressdruckes des Prägewerkzeuges ein lokales Fließen des polymeren Materials hervorgerufen wird, welches zur Glättung in Form der gewünschten Radiusanprägung führt.

Im Rahmen der Erfindung liegt es insbesondere, dass die Erzeugung des Durchbruchs und / oder der Radiusanprägung CNC-gesteuert wird. Der Begriff CNC bedeutet übersetzt "Computergestützte numerische Steuerung" und stellt eine elektronische Methode zur Steuerung und Regelung von Werkzeugmaschinen bzw. entsprechenden Geräten dar. Die CNC-Steuerung ermöglicht ein Höchstmaß an Flexibilität, da das Fertigungsverfahren auf einem entsprechenden Computerprogramm basiert, welches beispielsweise auf Basis der CAD-Daten des herzustellenden Bauteils ohne großen Aufwand erstellt werden kann. Sofern ein Bauteilwechsel erfolgt, muss folglich lediglich eine Neuprogrammierung der beiden Verfahrensschritte erfolgen, während eine konstruktive Umgestaltung der Werkzeuge bzw. der gesamten Vorrichtung - so wie dies beim Stanzverfahren erforderlich ist - vollständig entfällt. Damit weist das erfindungsgemäße Verfahren ein Höchstmaß an Flexibilität auf.

Im Rahmen der Erfindung liegt es insbesondere, dass der Durchbruch mittels eines rotierenden Fräskopfes oder mittels eines Laserstrahls erzeugt wird. Grundsätzlich kann das Werkzeug zur Erzeugung des Durchbruches computergestützt gesteuert werden. Gleiches gilt für das Prägewerkzeug zur Radienanprägung, das im Folgenden noch ausführlich erläutert wird. Das Prägewerkzeug kann durch automatischen Werkzeugwechsel, z. B. im Wechsel mit dem Fräskopf zur Erzeugung des Durchbruches, eingespannt werden oder alternativ auch in die Fräskopfaufnahme integriert werden. Bei Fräsmaschinen mit durchgehender Antriebsspindel kann die zweite Abtriebsseite als Aufnahme für das Prägewerkzeug dienen.

Zweckmäßigerweise wird nach der Radiusanprägung mittels eines Fügeprozesses mindestens ein Zusatz-Anbauteil am Kfz-Bauteil montiert. Dieser Fügevorgang kann beispielsweise ein Ankleben oder auch ein Anschweißen sein. Bei den anzufügenden Anbauteilen kann es sich z. B. um Adapter für Parktronic-Systeme, Rahmen für Scheinwerferreinigungsmodule oder Sidemarker-Gehäuse (Gehäuse für Seitenmarkierungsleuchten) handeln.

Der vom Prägewerkzeug erzeugte Prägeradius beträgt zweckmäßigerweise 0,01 mm bis 5 mm, vorzugsweise 0,1 mm bis 3 mm. Zweckmäßigerweise wird der Prägeradius so klein gewählt, dass die Scharfkantigkeit des Übergangs von Innenberandung zu äußerer Bauteiloberfläche komplett beseitigt wird und dabei dennoch das äußere Erscheinungsbild der Bauteiloberfläche im der umlaufenden Kante unmittelbar benachbarten Bereich weitgehend unbeeinträchtigt bleibt. Die Prägetiefe, die den von der Radiusanprägung betroffenen Bereich der Innenberandung definiert, beträgt 0,05 bis 0,4, z.B. 0,1 bis 0,3 mm.

Das Prägewerkzeug ist erfindungsgemäß zylindrisch ausgebildet und weist an seiner zur Bauteilbearbeitung dienenden Stirnseite mindestens zwei Werkzeugoberflächen auf, wobei der ringförmige Übergangsbereich zwischen den beiden Werkzeugoberflächen den Bereich der Bauteilbearbeitung bildet. Die Werkzeugoberflächen sind hierbei konisch ausgebildet und weisen gegenüber der Werkzeugachse unterschiedliche Neigungswinkel auf. An diese beiden konischen Werkzeugoberflächen können eine oder mehrere weitere, beispielsweise gekrümmte, Oberflächen der Stirnseite des Prägewerkzeuges anschließen. Erfindungswesentlich ist die Gestaltung der beiden Werkzeugoberflächen im unmittelbaren Bereich der Bauteilbearbeitung. So schließt beispielsweise die äußere Werkzeugoberfläche mit der Werkzeugachse einen Winkel α von 55° bis 85°, vorzugsweise 65° bis 75°, ein. Die innere Werkzeugoberfläche schließt hingegen mit der Werkzeugachse vorzugsweise einen Winkel von 15° bis 45°, insbesondere 25° bis 35°, ein.

Im Rahmen der Erfindung liegt es auch, dass mit dem Prägewerkzeug zusätzlich zur Radiusanprägung eine gleichzeitige Bearbeitung des der umlaufenden Kante abgewandten unteren Bereiches der Innenberandung erfolgt. Diese Bearbeitung kann insbesondere so gestaltet sein, dass der untere Bereich der Innenberandung durch eine entsprechende Konuskontur des Prägewerkzeuges eine Konusform erhält, die sich vorzugsweise zur umlaufenden Kante hin verjüngt. Diese Konusform kann beispielsweise zum Einklemmen eines entsprechenden Zusatz-Anbauteils (z. B. Parksensorhalter oder dergleichen) dienen.

Das polymere Bauteil besteht vorzugsweise aus einem thermoplastischen Kunststoff, z. B. auf Polypropylenbasis, insbesondere einem PP/EPDM-Blend.

Im Folgenden wird die Erfindung anhand einer lediglich ein Ausführungsbeispiel darstellenden Zeichnung ausführlich erläutert. Es zeigen schematisch:
- Fig. 1: eine Stanzvorrichtung zur Erzeugung von Durchbrüchen in einem polymeren Kfz-Bauteil gemäß dem Stand der Technik,
- Fig. 2: einen Stanzstempel zur Erzeugung entsprechender Durchbrüche gemäß dem Stand der Technik in zwei unterschiedlichen Darstellungen,
- Fig. 3: ein erfindungsgemäßes Prägewerkzeug zur Radiusanprägung in zwei unterschiedlichen Darstellungen,
- Fig. 4: ein erfindungsgemäßes Verfahren zur Herstellung einer Radiusanprägung in einer Detaildarstellung, die dem Schnitt A - A in Fig. 5 entspricht,
- Fig. 5: das in der Fig. 4 im Querschnitt dargestellte Verfahren in einer Draufsicht und
- Fig. 6: ein alternatives erfindungsgemäßes Prägewerkzeug.

Die Fig. 1 zeigt eine im Stand der Technik bekannte Stanzvorrichtung 1, welche üblicherweise zur Erzeugung von Durchbrüchen in polymeren Kfz-Bauteilen eingesetzt wird. Ein solches Kfz-Bauteil in Form eines Stoßfängers 2 ist in der Fig. 1 ebenfalls erkennbar. An der Stanzmaschine 1 ist entsprechend zu den zu erzeugenden Durchbrüchen, von denen ein Durchbruch 3 in Fig. 1 gut zu sehen ist, eine Vielzahl von Stanzstempeln montiert, von denen ein Stanzstempel 4 exemplarisch in Fig. 2 dargestellt ist. Die Schnittdarstellung des Stanzstempels 4 in Fig. 2 links zeigt, dass dieser im Bearbeitungsbereich 5 mit einem Radius r_{St} versehen ist, der zur Radiusanprägung dient. Insbesondere anhand der rechten 3D-Darstellung des Stanzstempels 4 ist erkennbar, dass dieser zylindrisch ausgebildet ist und entsprechend ausschließlich zur Herstellung eines kreisförmigen Loches mit genau definiertem Durchmesser verwendet werden kann. Mit Hilfe der Radiusanprägung wird die durch das Stanzverfahren erzeugte scharfe umlaufende Kante des entsprechenden Durchbruchs geglättet.

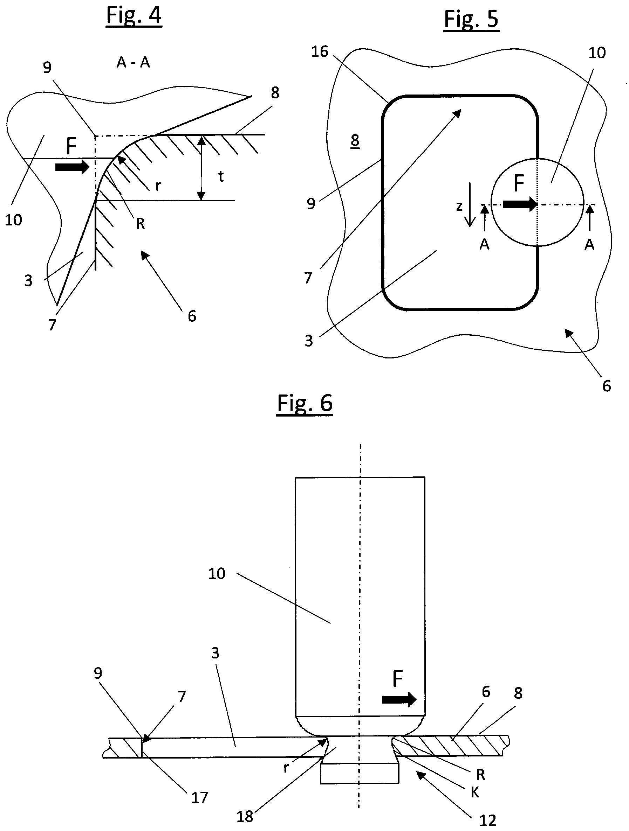

Gemäß dem erfindungsgemäßen Verfahren wird nun vom im Stand der Technik bekannten Stanzverfahren gemäß Fig. 1 und 2 Abstand genommen. Im Ausführungsbeispiel wird der Stoßfänger 2 zunächst - in Analogie mit dem Stand der Technik - mittels eines nicht näher dargestellten Spritzgussverfahrens in Form eines polymeren Rohbauteils 6 (vergl. Fig. 4 - 6) hergestellt. Danach wird mit Hilfe eines ersten automatisierten Verfahrensschrittes mindestens ein Durchbruch 3 im Rohbauteil 6 erzeugt, der sodann eine Innenberandung 7 des Rohbauteils 6 definieren. Anschließend wird in einem separaten, zweiten automatisierten Verfahrensschritt eine Radiusanprägung R an die von äußerer Rohbauteiloberfläche 8 und Innenberandung 7 gebildete umlaufende (aufgrund des gewählten Herstellungsverfahrens zur Herstellung des Durchbruchs 3 in der Regel scharfe) Kante 9 durchgeführt, indem ein Prägewerkzeug 10 mit einer dem gewünschten Radius r der Anprägung entsprechenden Kontur mit einer Kraft F entlang der Innenberandung 7 gegen die umlaufende Kante 9 gedrückt wird. Im Rahmen der Erfindung liegt es hierbei, dass das Rohbauteil 6 vor der Erzeugung des Durchbruchs mit einer oder mehreren (nicht näher dargestellten) Lackschichten lackiert wird.

Die Fig. 3 zeigt ein erfindungsgemäßes Prägewerkzeug 10 in unterschiedlichen Darstellungen. Links ist eine dreidimensionale Darstellung eines solchen Werkzeuges 10, rechts dieses Werkzeug 10 ausschnittsweise vergrößert im Bereich der Bearbeitungszone 15 in einer Seitenansicht dargestellt. Es ist erkennbar, dass das Prägewerkzeug 10 zylindrisch ausgebildet ist und an seiner zur Bauteilbearbeitung dienenden Stirnseite 12 zwei Werkzeugoberflächen 13, 14 aufweist, wobei der ringförmige Übergangsbereich 15 zwischen den beiden Werkzeugflächen 13, 14 den Bereich der Bauteilbearbeitung bildet. Dieser Übergangsbereich 15 weist einen Radius r von 0,01 mm bis 5 mm, vorzugsweise 0,1 mm bis 3 mm auf, welcher dem mit dem Werkzeug 10 herstellbaren Prägeradius entspricht. Insbesondere der rechten Darstellung in Fig. 3 ist zu entnehmen, dass die Werkzeugoberflächen 13, 14 konisch ausgebildet sind und gegenüber der Werkzeugachse x unterschiedliche Neigungswinkel α, β aufweisen. So schließt die äußere Werkzeugoberfläche 13 mit der Werkzeugachse x einen Winkel α von 65° bis 75° ein, während die innere Werkzeugoberfläche 14 mit der Werkzeugachse x einen Winkel β von 25° bis 35° einschließt. Um eine möglichst glatte Oberfläche im Bereich der Radiusanprägung R erzeugen zu können, ist der ringförmige Übergangsbereich 15 poliert.

Die Fig. 4 zeigt nun in der Zusammenschau mit der Fig. 5 ein erfindungsgemäßes Verfahren einer Detaildarstellung, wobei die Fig. 4 den durch den gestrichelten Kreis in Fig. 3 gekennzeichneten Bereich des Prägewerkzeugs 10 zeigt. Der insbesondere in Fig. 5 erkennbare Durchbruch 3 im Rohbauteil 6 weist eine rechteckige Form mit abgerundeten Ecken 16 auf und dient als (im fertig hergestellten Stoßfänger 2 mittels einer bewegbaren Blende verschließbaren) Öffnung für eine Scheinwerferreinigungsanlage. Dieser Durchbruch wird mittels eines (nicht dargestellten) Werkzeugs in Form eines rotierenden Fräskopfes oder mittels eines Laserstrahls erzeugt, wobei die Erzeugung des Durchbruches CNC-gesteuert wird. Durch die Herstellung des Durchbruches 3 entsteht eine umlaufende, scharfe Kante 9, welche in Fig. 4 gestrichelt dargestellt ist. Zur Entfernung dieser Scharfkantigkeit erfolgt mittels des zweiten erfindungsgemäßen Verfahrensschrittes eine Radiusanprägung R mit dem erfindungsgemäßen Prägewerkzeug 10. Dieses kann durch einen automatischen Werkzeugwechsel eingespannt werden oder aber auch in die Fräskopfaufnahme integriert sein. Die Erzeugung der Radiusanprägung R erfolgt spanlos. Das Prägewerkzeug 10 wird ohne Eigenrotation, also in Form einer rein translatorischen Bewegung, entlang der Innenberandung 7 in z-Richtung verfahren (vergl. Fig. 5) und hierbei mit der Kraft F gegen die umlaufende, scharfe Kante 9 gedrückt. Hierdurch erfolgt ein lokales Fließen des polymeren Werkstoffs im Bereich der scharfen Kante 9, welche damit eine Radiusanprägung R erhält, wie sie in Fig. 4 mittels der entsprechenden durchgezogenen Linie dargestellt ist. Der vom Prägewerkzeug 10 erzeugte Prägeradius r beträgt 0,01 mm bis 5 mm, z. B. 0,1 bis 3 mm. Die Prägetiefe t, die den von der Radiusanprägung R betroffenen Bereich der Innenberandung 7 definiert, beträgt 0,05 bis 0,4, z.B. 0,1 bis 0,3 mm. Sofern das Prägewerkzeug 10 die in Fig. 5 umlaufende Kante 9 mindestens einmal komplett abgefahren, also eine der Kontur der Kante 9 entsprechende Bahnlinie beschrieben hat, so ist die gesamte umlaufende Kante 9 mit der gewünschten Radiusanprägung R versehen.

Die Fig. 6 zeigt eine alternative Ausführungsform eines erfindungsgemäßen Prägewerkzeuges 10. Mit Hilfe dieses Prägewerkzeuges 10 erfolgt zusätzlich zur Radiusanprägung R eine gleichzeitige Bearbeitung des der umlaufenden Kante 9 abgewandten unteren Bereichs 17 der Innenberandung 7. Hierbei erhält der untere Bereich 17 der Innenberandung 7 durch eine entsprechende Konuskontur 18 des Prägewerkzeuges 10 eine Konusform K, die sich zur umlaufenden Kante 9 hin verjüngt. Diese Konusform K kann beispielsweise zum Einklemmen von Gehäusen dienen, welche zur Aufnahme von Parksensoren oder dergleichen vorgesehen sind.

## Patentansprüche

1. Verfahren zur Herstellung eines polymeren Kfz-Bauteils (2), insbesondere eines Außenanbauteils in Form eines Stoßfängers, Spoilers, Schwellers, Kotflügels oder dergleichen,
- wobei zunächst, vorzugsweise mittels eines Spritzgussverfahrens, ein polymeres Rohbauteil (6) hergestellt wird,
- wobei danach mittels eines ersten automatisierten Verfahrensschrittes mindestens ein Durchbruch (3) im Rohbauteil (6) erzeugt wird, der sodann eine Innenberandung (7) des Rohbauteils (6) definiert,
- wobei danach in einem separaten, zweiten automatisierten Verfahrensschritt eine Radiusanprägung (R) an die von äußerer Rohbauteiloberfläche (8) und Innenberandung (7) gebildete umlaufende Kante (9) erfolgt, indem ein Prägewerkzeug (10) mit einer dem gewünschten Radius (r) der Anprägung (R) entsprechenden Kontur entlang der Innenberandung (7) gegen die umlaufende Kante (9) gedrückt wird,
- wobei das Prägewerkzeug (10) die umlaufende Kante (9) mindestens einmal komplett abfährt, also eine der Kontur der Kante (9) entsprechende Bahnlinie beschreibt, so dass die gesamte umlaufende Kante (9) mit der gewünschten Radiusanprägung (R) versehen wird,
- wobei das Prägewerkzeug (10) zylindrisch ausgebildet ist und an seiner zur Bauteilbearbeitung dienenden Stirnseite (12) mindestens zwei Werkzeuaoberflächen (13, 14) aufweist,
- wobei ein ringförmiger Übergangsbereich (15) zwischen den beiden Werkzeugoberflächen (13, 14) den Bereich der Bauteilbearbeitung bildet,
- und wobei beide Werkzeuaoberflächen (13, 14) konisch ausgebildet sind und gegenüber der Werkzeugachse (x) unterschiedliche Neigungswinkel aufweisen.

2. Verfahren nach Anspruch 1, **dadurch gekennzeichnet, dass** das Rohbauteil (6) vor der Radiusanprägung (R) mit mindestens einer Lackschicht lackiert wird.

3. Verfahren nach Anspruch 1 oder 2, **dadurch gekennzeichnet, dass** die Erzeugung der Radiusanprägung (R) spanlos erfolgt.

4. Verfahren nach einem der Ansprüche 1 bis 3, **dadurch gekennzeichnet, dass** das Prägewerkzeug (10) ohne Eigenrotation entlang der Innenberandung (7) verfahren und hierbei gegen die umlaufende Kante (9) gedrückt wird.

5. Verfahren nach einem der Ansprüche 1 bis 4, **dadurch gekennzeichnet, dass** die Erzeugung des Durchbruchs (3) und / oder der Radiusanprägung (R) CNC-gesteuert wird.

6. Verfahren nach einem der Ansprüche 1 bis 5, **dadurch gekennzeichnet, dass** der Durchbruch (3) mittels eines rotierenden Fräskopfes oder mittels eines Laserstrahls erzeugt wird.

7. Verfahren nach Anspruch 6, **dadurch gekennzeichnet, dass** das Prägewerkzeug (10) durch automatischen Werkzeugwechsel eingespannt oder in die Fräskopfaufnahme integriert wird.

8. Verfahren nach einem der Ansprüche 1 bis 7, **dadurch gekennzeichnet, dass** nach der Radiusanprägung (R) mittels eines Fügeprozesses mindestens ein Anbauteil am Kfz-Bauteil (2) montiert wird.

9. Verfahren nach einem der Ansprüche 1 bis 8, **dadurch gekennzeichnet, dass** der vom Prägewerkzeug (10) erzeugte Prägeradius (r) 0,01 bis 5 mm, vorzugsweise 0,1 bis 3 mm, beträgt.

10. Verfahren nach einem der Ansprüche 1 bis 9, **dadurch gekennzeichnet, dass** die äußere Werkzeugoberfläche (13) mit der Werkzeugachse (x) einen Winkel (α) von 55 bis 85°, vorzugsweise 65 bis 75°, einschließt.

11. Verfahren nach einem der Ansprüche 1 bis 10, **dadurch gekennzeichnet, dass** die innere Werkzeugoberfläche (14) mit der Werkzeugachse (x) einen Winkel (β) von 15 bis 45°, vorzugsweise 25 bis 35°, einschließt.

12. Verfahren nach einem der Ansprüche 1 bis 11, **dadurch gekennzeichnet, dass** mit dem Prägewerkzeug (10) zusätzlich zur Radiusanprägung (R) eine gleichzeitige Bearbeitung des der umlaufenden Kante (9) abgewandten unteren Bereiches (17) der Innenberandung (7) erfolgt.

13. Verfahren nach Anspruch 12, **dadurch gekennzeichnet, dass** der untere Bereich (17) der Innenberandung (7) durch eine entsprechende Konuskontur (18) des Prägewerkzeugs (10) eine Konusform (K) erhält, die sich vorzugsweise zur umlaufenden Kante (9) hin verjüngt.

## Claims

1. A method for producing a polymeric motor-vehicle component (2), in particular an external attachment in the form of a bumper, spoiler, sill, wing or the like,
- wherein initially, preferably by means of an injection-moulding process, a polymeric raw component (6) is produced,
- wherein thereafter by means of a first automated method step at least one aperture (3) is produced in the raw component (6), which aperture then defines an inner boundary (7) of the raw component (6),
- wherein thereafter in a separate, second, automated method step radial embossing (R) takes place on the circumferential edge (9) formed by the outer raw component surface (8) and inner boundary (7), in that an embossing tool (10) with a contour corresponding to the desired radius (r) of the embossing (R) is pressed along the inner boundary (7) against the circumferential edge (9),
- wherein the embossing tool (10) completely travels along the circumferential edge (9) at least once, i.e. describes a path line corresponding to the contour of the edge (9), so that the entire circumferential edge (9) is provided with the desired radial embossing (R),
- wherein the embossing tool (10) is designed to be cylindrical and comprises at least two tool surfaces (13, 14) on its end face (12) which serves for machining the component,
- wherein an annular region of transition (15) between the two tool surfaces (13, 14) forms the component machining region,
- and wherein both tool surfaces (13, 14) are designed to be conical and have different angles of inclination relative to the tool axis (x).

2. A method according to Claim 1, **characterised in that** the raw component (6) prior to the radial embossing (R) is painted with at least one layer of paint.

3. A method according to Claim 1 or 2, **characterised in that** the production of the radial embossing (R) occurs chipless.

4. A method according to one of Claims 1 to 3, **characterised in that** the embossing tool (10) is moved without self-rotation along the inner boundary (7) and is thereby pressed against the circumferential edge (9).

5. A method according to one of Claims 1 to 4, **characterised in that** the production of the aperture (3) and/or of the radial embossing (R) is CNC-controlled.

6. A method according to one of Claims 1 to 5, **characterised in that** the aperture (3) is produced by means of a rotating milling head or by means of a laser beam.

7. A method according to Claim 6, **characterised in that** the embossing tool (10) is clamped by automatic tool change or is integrated in the milling-head mount.

8. A method according to one of Claims 1 to 7, **characterised in that** after the radial embossing (R) by means of a joining process at least one attachment part is mounted on the motor-vehicle component (2).

9. A method according to one of Claims 1 to 8, **characterised in that** the embossing radius (r) produced by the embossing tool (10) is 0.01 to 5 mm, preferably 0.1 to 3 mm.

10. A method according to one of Claims 1 to 9, **characterised in that** the outer tool surface (13) encloses an angle (α) of 55 to 85°, preferably 65 to 75°, with the tool axis (x).

11. A method according to one of Claims 1 to 10, **characterised in that** the inner tool surface (14) encloses an angle (β) of 15 to 45°, preferably 25 to 35°, with the tool axis (x).

12. A method according to one of Claims 1 to 11, **characterised in that** in addition to the radial embossing (R) simultaneous machining of the lower region (17) of the inner boundary (7) facing away from the circumferential edge (9) takes place with the embossing tool (10).

13. A method according to Claim 12, **characterised in that** a conical shape (K) is imparted to the lower region (17) of the inner boundary (7) by a corresponding conical contour (18) of the embossing tool (10), which shape preferably tapers towards the circumferential edge (9).

## Revendications

1. Procédé destiné à fabriquer une pièce pour véhicule automobile (2) polymère, en particulier une pièce rapportée extérieure sous la forme d'un pare-chocs, d'un becquet, d'un bas de caisse, d'un garde-boue ou similaire,
- dans lequel dans un premier temps une pièce brute (6) polymère est fabriquée de préférence au moyen d'un procédé de moulage par injection,
- dans lequel par la suite au moins un ajour (3) est produit dans la pièce brute (6) au moyen d'une première étape de procédé automatisée, lequel définit dès lors une bordure intérieure (7) de la pièce brute (6),
- dans lequel un estampage radial (R) est effectué par la suite lors d'une deuxième étape de procédé automatisée séparée au niveau de l'arête (9) périphérique formée par une surface de pièce brute extérieure (8) et une bordure intérieure (7) en ce qu'un outil d'estampage (10) avec un contour correspondant au rayon (r) souhaité de l'estampage (R) est pressé le long de la bordure intérieure (7) contre l'arête (9) périphérique,
- dans lequel l'outil d'estampage (10) parcourt au moins une fois complètement l'arête (9) périphérique, donc décrit une trajectoire correspondant au contour de l'arête (9) de sorte que l'ensemble de l'arête (9) périphérique est pourvu de l'estampage radial (R) souhaité,
- dans lequel l'outil d'estampage (10) est réalisé de manière cylindrique et présente, au niveau de son côté frontal (12) destiné à l'usinage de pièce, au moins deux surfaces d'outil (13, 14),
- dans lequel une zone de transition (15) de forme annulaire entre les deux surfaces d'outil (13, 14) forme la zone de l'usinage de pièce,
- et dans lequel les deux surfaces d'outil (13, 14) sont réalisées de manière conique et présentent des angles d'inclinaison différents par rapport à l'axe d'outil (x).

2. Procédé selon la revendication 1, **caractérisé en ce que** la pièce brute (6) est vernie d'au moins une couche de vernis avant l'estampage radial (R).

3. Procédé selon la revendication 1 ou 2, **caractérisé en ce que** la production de l'estampage radial (R) est effectuée sans copeaux.

4. Procédé selon l'une quelconque des revendications 1 à 3, **caractérisé en ce que** l'outil d'estampage (10) est déplacé sans rotation propre le long de la bordure intérieure (7) et est pressé dans le cas présent contre l'arête (9) périphérique.

5. Procédé selon l'une quelconque des revendications 1 à 4, **caractérisé en ce que** la production de l'ajour (3) et/ou de l'estampage radial (R) est commandée par une commande numérique par calculateur.

6. Procédé selon l'une quelconque des revendications 1 à 5, **caractérisé en ce que** l'ajour (3) est produit au moyen d'une tête de fraisage rotative ou au moyen d'un rayon laser.

7. Procédé selon la revendication 6, **caractérisé en ce que** l'outil d'estampage (10) est enserré par un remplacement d'outil automatique ou soit intégré dans le logement de tête de fraisage.

8. Procédé selon l'une quelconque des revendications 1 à 7, **caractérisé en ce qu'**au moins une pièce rapportée est montée au niveau de la pièce de véhicule automobile (2) après l'estampage radial (R) au moyen d'un processus d'assemblage.

9. Procédé selon l'une quelconque des revendications 1 à 8, **caractérisé en ce que** le rayon d'estampage (r) produit par l'outil d'estampage (10) est de 0,01 à 5 mm, de préférence de 0,1 à 3 mm.

10. Procédé selon l'une quelconque des revendications 1 à 9, **caractérisé en ce que** la surface d'outil extérieure (13) forme avec l'axe d'outil (x) un angle (α) allant de 55 à 85°, de préférence de 65 à 75°.

11. Procédé selon l'une quelconque des revendications 1 à 10, **caractérisé en ce que** la surface d'outil intérieure (14) forme avec l'axe d'outil (x) un angle (β) allant de 15 à 45°, de préférence de 25 à 35°.

12. Procédé selon l'une quelconque des revendications 1 à 11, **caractérisé en ce qu'**un usinage simultané de la zone inférieure (17), opposée à l'arête (9) périphérique, de la bordure intérieure (7) est effectué avec l'outil d'estampage (10) en plus de l'estampage radial (R).

13. Procédé selon la revendication 12, **caractérisé en ce que** la zone inférieure (17) de la bordure intérieure (7) reçoit, par un contour conique (18) correspondant de l'outil d'estampage (10), une forme conique (K), qui se rétrécit de préférence en direction de l'arête (9) périphérique.
